# EUROPEAN PATENT APPLICATION

(11) **EP 1 465 433 A2**
(43) Date of publication of application: **06.10.2004**
(21) Application number: 04005557.6
(22) Date of filing: 09.03.2004
(51) Int. Cl.: H04N 7/50

(54) **Information terminal unit and communication method based thereon**

(30) Priority: 18.03.2003 JP 2003073585
(71) Applicant: MATSUSHITA ELECTRIC INDUSTRIAL CO., LTD., Kadoma-shi, Osaka 571-8501 (JP)
(72) Inventor: Kajita, Satoshi, Yukuhashi-Shi Fukuoka-Ken 824-0066 (JP); Ejima, Takayuki, Kasuya-Gun Fukuoka-Ken, 811-2312 (JP); Kataoka, Tomonori, Oonojyo-Shi Fukuoka-Ken, 816-0983 (JP); Fuchigami, Ikuo, Kasuya-Gun Fukuoka-Ken, 811-2304 (JP); Imagawa, Kazuyuki, Fukuoka-Shi Fukuoka-Ken, 810-0015 (JP); Iwasa, Katsuhiro, Iizuka-Shi Fukuoka-Ken, 820-0066 (JP)
(74) Representative: Pautex Schneider, Nicole

(57) **Abstract**

The characteristic-detecting unit (20) is operable to detect characteristics from a first or second information terminal unit-captured image. The first information terminal unit-captured image has been obtained by an image input unit (10). The second information terminal unit-captured image has been decoded by an image-decoding unit (80). The characteristic-detecting unit (20) is further operable to control an image-encoding unit (30), an image-displaying unit (90), the image-decoding unit (80), or the image input unit (10) in accordance with the characteristic information. The control system provides a reduced amount of processing required for image encoding, either stops displaying the images or displays fewer images, either stops transferring the images from the image-decoding unit (80) to the image-displaying unit (90) or transfers fewer images therebetween in the same transfer direction, and provides fewer image-captured frames. This feature provides an information terminal unit characterized by thrifty power consumption.

## Description

The present invention relates to information terminal unit and a communication method based thereon. In particular, it relates to an improved art operable to provide thrifty power consumption in an information terminal unit designed to display and communicate image information.

A mobile multimedia communication terminal (hereinafter called a mobile terminal) is now being widespread, and applications such as videophones and communication games have been utilized. The mobile terminal usually uses a rechargeable battery as a power source, but the rechargeable battery can supply only limited electric power. Therefore, there has been a key issue to suppress power consumption in the mobile terminal.

In particular, an image encoding-decoding algorithm to communicate images between a pair of the mobile terminals is characterized by a considerable amount of calculation, and attempts have been made to reduce electric power to be consumed during image encoding-decoding steps. Refer to published Japanese Patent Application No. (Hei) 8-526753.

However, recently available mobile terminals consume a noticeably increasing amount of electric power, when compared with prior types of mobile terminals, because trends of the current mobile terminals are that image-assisted applications have been on the increase, and that the mobile terminals use a larger-sized display on which pictures are displayed. As a result, the prior art countermeasures to reduce the electric power to be used during the image encoding-decoding steps are insufficient to realize a mobile terminal characterized by thrifty power consumption. More specifically, there has been a need for an improved art to allow the entire system of each of the mobile terminals to consume less electric power.

In view of the above, an object of the present invention is to provide an information terminal unit operable to communicate image information between first and second users, thereby displaying first or second information terminal unit-captured image on the information terminal unit, and operable to consume less electric power.

A first aspect of the present invention provides an information terminal unit operable to capture and transmit the first information terminal unit-captured image to a second information terminal unit, comprising: an image input unit operable to capture the first information terminal unit-captured image; a characteristic-detecting unit operable to detect characteristics from the first information terminal unit-captured image that has been captured by the image input unit, thereby generating characteristic information; an image-encoding unit operable to encode the first information terminal unit-captured image that has been captured by the image input unit; and an encoded information-transmitting unit operable to transmit encoded image information to the second information terminal unit, the encoded image information being produced by the image-encoding unit, wherein the characteristic-detecting unit controls, using the characteristic information, the image-encoding unit in encoding the first information terminal unit-captured image.

The above system realizes a power-saving information terminal unit operable to control steps taken by the image-encoding unit, using the characteristic information from the first information terminal unit-captured image. For example, when an entered image is judged as a meaningless or valueless image by way of communication information for the user of the information terminal unit, then the steps taken by the image-encoding unit are stopped to permit the information terminal unit to consume less electric power.

A second aspect of the present invention provides an information terminal unit as defined in the first aspect of the present invention, wherein the characteristic-detecting unit is operable to change, in accordance with the characteristic information, a number of steps in encoding the first information terminal unit-captured image in the image-encoding unit.

The above system provides a power-saving information terminal unit operable to change the number of image-encoding steps in accordance with the characteristic information from the first information terminal unit-captured image. More specifically, when the analysis of the obtained characteristic information judges that an entered image is a meaningless or valueless image by way of communication information for the user of the information terminal unit, then fewer image-encoding steps are taken to permit the information terminal unit to consume less electric power to encode the image.

A third aspect of the present invention provides an information terminal unit as defined in the first aspect of the present invention, wherein the characteristic-detecting unit is operable to change, in accordance with the characteristic information, a condition of a motion vector search performed by the image-encoding unit.

The above system allows the information terminal unit to change, using the characteristic information from the first information terminal unit-captured image, both a search range and searching times to search a motion vector in the image-encoding unit. When the analysis of the obtained characteristic information determines that an entered image is a meaningless or valueless image by way of communication information for the user of the information terminal unit, then a smaller search range or less searching times to search the motion vector may be provided although a target image to be encoded is somewhat degraded in image quality. As a result, the information terminal unit consumes less electric power to search the motion vector.

A fourth aspect of the present invention provides an information terminal unit as defined in the first aspect of the present invention, wherein the characteristic-detecting unit is operable to change, in accordance with the characteristic information, an amount of codes to be generated for the first information terminal unit-captured image in the image-encoding unit.

The above system allows the information terminal unit to change, using the characteristic information from the first information terminal unit-captured image, an amount of generated codes produced by the image-encoding unit. For example, assume that DCT (discrete cosine transformation) is employed for image encoding. When the analysis of the obtained characteristic information determines that an entered image is an extremely insignificant image by way of communication information for the user of the information terminal unit, then the obtained DCT coefficients are changed to include many zeros, thereby reducing amounts of subsequent steps after the DCT calculation step. This feature provides a power-saving information terminal unit operable to consume less electric power to take the subsequent steps after the DCT calculation step.

A fifth aspect of the present invention provides an information terminal unit as defined in the first aspect of the present invention, wherein the characteristic-detecting unit is operable to change, in accordance with the characteristic information, a frame rate in encoding the first information unit-captured image in the image-encoding unit.

The above system allows the information terminal unit to change, using the characteristic information from the first information terminal unit-captured image, the number of frames per second of target images to be encoded, which are processed by the image-encoding unit. For example, when significant characteristics for the user of the information terminal unit are absent in an entered image, then some of the target frames may be skipped in encoding. As a result, the information terminal unit consumes less electric power to encode the images.

A sixth aspect of the present invention provides an information terminal unit operable to capture and transmit a first information terminal unit-captured image to a second information terminal unit, comprising: an image input unit operable to capture the first information terminal unit-captured image; an image-displaying unit operable to display thereon the first information terminal unit-captured image that has been captured by the image input unit; a characteristic-detecting unit operable to detect characteristics from the first information terminal unit-captured image that has been captured by the image input unit, thereby generating characteristic information; an image-encoding unit operable to encode the first information terminal unit-captured image that has been captured by the image input unit; and an encoded information-transmitting unit operable to transmit encoded image information to the second information terminal unit, the encoded image information being produced by the image-encoding unit, wherein the characteristic-detecting unit is operable to change an image-displaying pattern in the image-displaying unit in accordance with the characteristic information, the image-displaying pattern including a number of displayed images and luminance of image displaying.

The above system allows the information terminal unit to change image-displaying patterns in the image-displaying unit using the characteristic information from the first information terminal unit-captured image. The image-displaying patterns include the number of displayed images and the luminance of image displaying. For example, when the characteristic information from the characteristic-detecting unit determines that an entered image is a meaningless or valueless image by way of communication information for the user of the information terminal unit, then the image-displaying unit is possible to display fewer first information terminal unit-captured images per unit time, or to provide a dimmer image plane on which the images are displayed. This feature provides a power-saving information terminal unit in which the image-displaying unit consumes less electric power.

A seventh aspect of the present invention provides an information terminal unit operable to receive an encoded, second information terminal unit-captured image from a second information terminal unit, comprising: an encoded information-receiving unit operable to receive the encoded, second information terminal unit-captured image; an image-decoding unit operable to decode the encoded, second information terminal unit-captured image received by the encoded information-receiving unit, thereby producing a second information terminal unit-captured image; a characteristic-detecting unit operable to detect characteristics from the second information terminal unit-captured image that has been produced by the image-decoding unit, thereby generating characteristic information; and an image-displaying unit operable to display thereon the second information terminal unit-captured image that has been produced by the image-decoding unit, wherein the characteristic-detecting unit is operable to control, using the characteristic information, a number of images to be transmitted from the image-decoding unit to the image-displaying unit, each of the images being composed of the second information terminal unit-captured image.

The above system allows the information terminal unit to control the number of the decoded, second information terminal unit-captured images using the characteristic information from the second information terminal unit-captured image when transferring the decoded, second information terminal unit-captured images from the image-decoding unit to the image-displaying unit. For example, when the received, second information terminal unit-captured image is determined as an insignificant image by way of received information for the user of the information terminal unit, then fewer second information terminal unit-captured images can be transferred to the image-displaying unit from the image-decoding unit. As a result, the information terminal unit consumes less electric power to transfer the images between the image-decoding unit and the image-displaying unit.

An eighth aspect of the present invention provides an information terminal unit as defined in the seventh aspect of the present invention, wherein the characteristic-detecting unit is operable to change an image-displaying pattern in the image-displaying unit using the characteristic information, the image-displaying pattern including a number of displayed images and luminance of image displaying.

The above system allows the information terminal unit to change a variety of image-displaying patterns in the image-displaying unit using the obtained characteristic information from the second information terminal unit-captured image. For example, assume that characteristics desired by the user of the information terminal unit are undetected from the second information terminal unit-captured image that has been decoded after receiving from the second information terminal unit. In the assumption, the image-displaying unit is possible to display thereon fewer second information terminal unit-captured images, or to provide a dimmer image plane on which the images are displayed. As a result, the image-displaying unit consumes less electric power.

A ninth aspect of the present invention provides an information terminal unit operable to capture and transmit a first information terminal unit-captured image to a second information terminal unit, and operable to receive and display a second information terminal unit-captured image from the second information terminal unit, comprising: an image input unit operable to capture the first information terminal unit-captured image; an image-encoding unit operable to encode the first information terminal unit-captured image that has been captured by the image input unit; an encoded information-transmitting unit operable to transmit encoded image information to the second information terminal unit, the encoded image information being produced by the image-encoding unit; an encoded information-receiving unit operable to receive an encoded, second information terminal unit-captured image from the second information terminal unit; an image-decoding unit operable to decode the encoded, second information terminal unit-captured image received by the encoded information-receiving unit, thereby producing a second information terminal unit-captured image; an image-displaying unit operable to display thereon the first and second information terminal unit-captured images, the first information terminal unit-captured image being captured by the image input unit, the second information terminal unit-captured image being produced by the image-decoding unit; and a characteristic-detecting unit operable to detect characteristics from the first and second information terminal unit-captured images, thereby generating characteristic information, the first information terminal unit-captured image being captured by the image input unit, the second information terminal unit-captured image being produced by the image-decoding unit, wherein the characteristic-detecting unit is operable to control, in accordance with the characteristic information, at least one of the image-encoding unit in image-encoding step, and the image-decoding unit in step of image transferring to the image-displaying unit, and the image-displaying unit in image-displaying step.

The above system allows the information terminal unit to control, using the obtained characteristic information from the first and second information terminal unit-captured images, at least one of the image-encoding step in the image-encoding unit, the step of transferring the image information to the image-displaying unit in the image-decoding unit, and the image-displaying step in the image-displaying unit. As a result, the above system provides beneficial effects similar to those according to the first to eighth aspects of the present invention as discussed above.

A tenth aspect of the present invention provides an information terminal unit as defined in the ninth aspect of the present invention, wherein the characteristic-detecting unit further comprises: a plurality of characteristic detection-processing units; and a control signal-generating unit operable to select any one of several pieces of characteristic information, thereby producing a control signal in accordance with selected characteristic information, the several pieces of characteristic information being detected by the plurality of characteristic detection-processing units, wherein the control signal-generating unit is operable to control, using a produced control signal, the image-encoding unit, the image-displaying unit, the image-decoding unit, and the image input unit.

The above system allows the characteristic-detecting unit to select any one of several pieces of the characteristic information, and to selectively employ an applicable power-saving method for each characteristic-detecting step in accordance with the selected characteristic information. Thus, the user can select any desired power-saving method.

An eleventh aspect of the present invention provides an information terminal unit operable to capture and transmit a first information terminal unit-captured image to a second information terminal unit, comprising: an image input unit operable to capture the first information terminal unit-captured image; a characteristic-detecting unit operable to detect characteristics from the first information terminal unit-captured image that has been captured by the image input unit, thereby generating characteristic information; an image-encoding unit operable to encode the first information terminal unit-captured image that has been captured by the image input unit; an external input unit operable to enter external information; a characteristic detecting step-changing unit operable to control the characteristic-detecting unit using the external information that has been entered by the external input unit into the characteristic detecting step-changing unit; and an encoded information-transmitting unit operable to transmit encoded image information to the second information terminal unit, the encoded image information being produced by the image-encoding unit.

The above system can selectively take characteristic-detecting steps using the external information such as, e.g., pen input or key input. As a result, the user of the information terminal unit can switch over among applicable power-saving methods to select any desired power-saving method.

When the user of the information terminal unit controls the external input unit such as the pen input or key input, then the characteristic-detecting unit judges that the first and second information terminal unit-captured images are of less importance. Accordingly, the characteristic-detecting unit controls the information terminal unit in such a manner that the image-displaying unit practices a reduced amount of processing. As a result, the information terminal unit consumes less electric power.

A twelfth aspect of the present invention provides an information terminal unit operable to capture and transmit a first information terminal unit-captured image to a second information terminal unit, and operable to receive and display a second information terminal unit-captured image from the second information terminal unit, comprising: an image input unit operable to capture the first information terminal unit-captured image; an image-encoding unit operable to encode the first information terminal unit-captured image that has been captured by the image input unit; an encoded information-transmitting unit operable to transmit encoded image information to the second information terminal unit, the encoded image information being produced by the image-encoding unit; an encoded information-receiving unit operable to receive an encoded, second information terminal unit-captured image from the second information terminal unit; an image-decoding unit operable to decode the encoded, second information terminal unit-captured image received by the encoded information-receiving unit, thereby producing a second information terminal unit-captured image; an image-displaying unit operable to display thereon the first and second information terminal unit-captured images, the first information terminal unit-captured image being captured by the image input unit, the second information terminal unit-captured image being produced by the image-decoding unit; a characteristic-detecting unit operable to detect characteristics from the first and second information terminal unit-captured images, thereby generating characteristic information, the first information terminal unit-captured image being captured by the image input unit, the second information terminal unit-captured image being produced by the image-decoding unit; an external input unit operable to enter external information; and a characteristic detecting step-changing unit operable to control the characteristic-detecting unit using the external information that has been captured by the external input unit into the characteristic detecting step-changing unit, wherein the characteristic-detecting unit is operable to control, in accordance with either one of manual control and automatic control, at least one of the image-encoding unit in image-encoding step, and the image-decoding unit in step of transferring image information to the image-displaying unit, and the image-displaying unit in image-displaying step, the manual control being driven by the external input unit, the automatic control being executed in accordance with the characteristic information generated by the characteristic-detecting unit.

The above system allows the information terminal unit to switch over among the plurality of characteristic-detecting units in accordance with either manual control driven by the external input unit or automatic control based on the characteristic information from the characteristic-detecting unit, and consequently to execute power-saving control in different manners. As a result, the above system realizes a power-saving information terminal unit that provides beneficial effects similar to those according to the seventh to ninth aspects of the present invention as discussed above.

A thirteenth aspect of the present invention provides an information terminal unit as defined in the first aspect of the present invention, wherein the characteristic-detecting unit controls starting and stopping characteristic detection from the first information terminal unit-captured image.

The above system allows the user of the information terminal unit to either start or stop detecting the characteristics at will. This feature provides improved convenience of the user because the user can temporarily stop a power-saving control function.

A fourteenth aspect of the present invention provides an information terminal unit as defined in the first aspect of the present invention, wherein the characteristic-detecting unit detects the characteristics by comparing the first information terminal unit-captured image captured by the image input unit with a previously prepared template.

For example, when the entered, first information terminal unit-captured image is inconsistent with the previously prepared template, then the characteristic-detecting unit judges that the image is of no importance. As a result, the information terminal unit takes power-saving steps.

A fifteenth aspect of the present invention provides an information terminal unit as defined in the first aspect of the present invention, wherein the characteristic-detecting unit detects the characteristics by comparing a motion vector obtained by the image-encoding unit with a previously prepared template.

For example, when the entered, first or second information terminal unit-captured image is inconsistent in motion with the previously prepared template, then the characteristic-detecting unit judges that the image is of no importance. As a result, the information terminal unit takes power-saving steps.

A sixteenth aspect of the present invention provides an information terminal unit as defined in the first aspect of the present invention, wherein the characteristic information generated by the characteristic-detecting unit is information on a face of a user of the information terminal unit.

For example, only when the entered, first information terminal unit-captured image is consistent with the face of the user of the information terminal unit, then the characteristic-detecting unit judges that the image is important. The judgment makes it feasible to switch over the information terminal unit from taking power-saving steps to taking usual steps.

The above, and other objects, features and advantages of the present invention will become apparent from the following description read in conjunction with the accompanying drawings, in which like reference numerals designate the same elements.
Fig. 1 is a block diagram schematically illustrating an information terminal unit according to a first embodiment of the present invention;
Fig. 2 is a block diagram illustrating the information terminal unit in which an image-encoding unit according to the first embodiment is shown in detail;
Fig. 3 is a block diagram schematically illustrating an information terminal unit according to a second embodiment;
Fig. 4 is a block diagram illustrating an image-displaying unit according to the second embodiment;
Fig. 5 is a block diagram illustrating an image-decoding unit according to the second embodiment;
Fig. 6 is a block diagram schematically illustrating an information terminal unit according to a third embodiment;
Fig. 7 is a block diagram illustrating a characteristic-detecting unit according to the third embodiment;
Fig. 8 is an illustration showing a user who looks at an information terminal unit; and
Fig. 9 is an illustration showing the user who turns his or her eyes away from the information terminal unit.

Embodiments of the present invention are now described with reference to the accompanying drawings. In the drawings as mentioned below, each solid line spanning between units denotes a path designed primarily to convey image information, while each dotted line between units denotes a path constructed chiefly to deliver control information.

### (First embodiment)

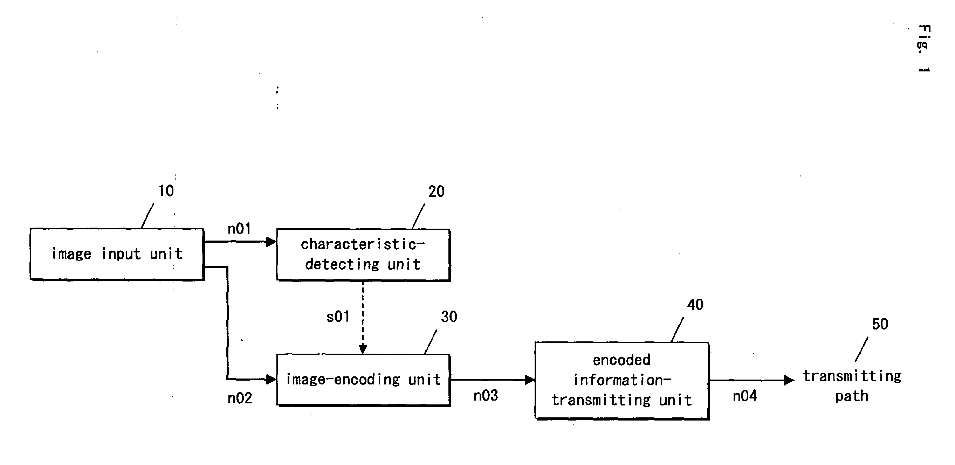

Fig. 1 is a block diagram schematically showing an information terminal unit according to a first embodiment of the present invention. The information terminal unit according to the present embodiment as illustrated in Fig. 1 includes an image input unit 10, a characteristic-detecting unit 20, an image-encoding unit 30, and an encoded information-transmitting unit 40.

The image input unit 10, formed by a CCD camera for example, is operable to capture an image, as input images "n01" and "n02", into the characteristic-detecting unit 20 and the image-encoding unit 30, respectively.

The characteristic-detecting unit 20 is operable to detect the presence of a target image in the input image "n01, and then to advise the image-encoding unit 30 of results from the detection as parameter-changing information "s01".

The image-encoding unit 30 is operable to encode the input image "n02" with reference to the parameter-changing information "s01". The encoded input image is conveyed as encoded information "n03" to the encoded information-transmitting unit 40.

The encoded information-transmitting unit 40 is operable to feed the encoded information "n03" into a transmitting path 50.

The process in which the characteristic-detecting unit 20 detects characteristics from the image is uncovered by the subject matter of the present invention, and detailed descriptions thereof are herein omitted. Just for reference, processes as taught in published Japanese Patent Applications No. 2001-120496 and No. 2001-152614 may be employed.

The present embodiment detects the presence of characteristic information in the input image. This feature makes it feasible to deal with the input image in different ways, and to encode the image information in a power-saving mode.

The image-encoding unit 30 encodes the input image "n02" in accordance with the commonly employed MPEG (Moving Picture Experts Group) standard.

The MPEG system practices intra-frame encoding and inter-frame encoding based on motion compensation, thereby providing encoding data having a high-compression ratio. Either a quantization step during those encoding processes or a search for a motion vector to compensate motion is controlled to save electric power. The following discusses in detail how the thrifty power consumption is realized in these steps.

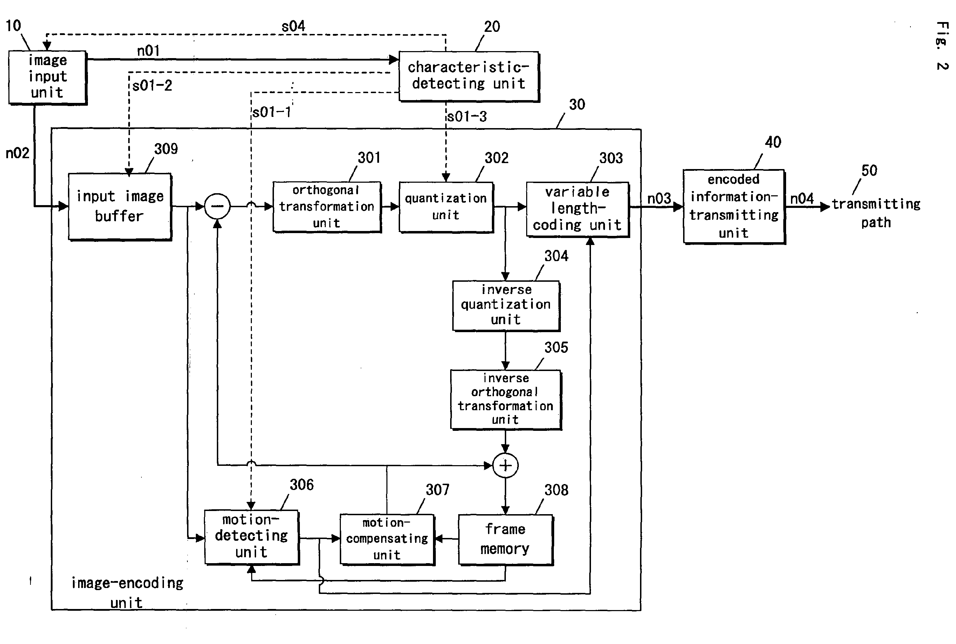

Fig. 2 is a block diagram showing the information terminal unit in which the image-encoding unit 30 according to the present embodiment is illustrated in detail.

The image-encoding unit 30 of Fig. 2 includes an input image buffer 309, an orthogonal transformation unit 301, a quantization unit 302, a variable length-coding unit 303, an inverse quantization unit 304, an inverse orthogonal transformation unit 305, a motion-detecting unit 306, a motion-compensating unit 307, and a frame memory 308.

The input image buffer 309, formed by a memory, contains the input image "n02" from the image input unit 10. The orthogonal transformation unit 301 performs the orthogonal transformation (e.g., DCT) of a difference between a target block to be encoded, which is taken off from the input image buffer 309, and a predictive reference block. The quantization unit 302 quantizes transformation coefficients from the orthogonal transformation unit 301 in accordance with a separately determined quantization width. The variable length-coding unit 303 practices the variable length coding of the quantized transformation coefficients and a motion vector as discussed later, and then sends results therefrom as the encoded information "n03" to the encoded information-transmitting unit 40. The inverse quantization unit 304 inversely quantizes a quantized signal to prepare a reference image for inter-frame prediction. The inverse orthogonal transformation unit 305 inversely orthogonally transforms the inversely quantized coefficients, thereby determining a differential block. The motion-detecting unit 306 determines a motion vector by calculating to minimize a differential absolute value sum between the target block to be detected, which comes from the input image buffer 309, and a reference image obtained from the frame memory 308 as discussed later. The motion-compensating unit 307 determines the predictive reference block based on the reference image from the frame memory 308, using the motion vector. The frame memory 308 contains a reference image block obtained by the addition of the predictive reference block to the differential block.

The following discusses control to save electric power between the characteristic-detecting unit 20 and the image-encoding unit 30. In the description as given blow, the above-described parameter-changing information "s01" is specifically separated into search range parameter-changing information "s01-1, input image capture parameter-changing information "s01-2, and quantization parameter-changing information "s01-3".

Initially, the first power-saving method operable to control the quantization unit 302 is now described.

When an object to be detected is absent in an input image, then the characteristic-detecting unit 20 feeds the quantization parameter-changing information "s01-3" into the quantization unit 302. The quantization unit 302 in receipt of the quantization parameter-changing information "s01-3" changes a quantization parameter for use in quantizing the obtained transformation coefficient from the orthogonal transformation unit 301.

The range of obtainable values of the quantization parameter is varied in accordance with different MPEG systems. For example, according to MPEG-4, the quantization parameter has a value ranging from "1" to "31 ".

When an object to be detected is absent in the input image, then the characteristic-detecting unit 20 increases the value of the quantization parameter. As a result, quantized values of the orthogonal transformation coefficients from the quantization unit 302 have fewer non-zero coefficients. More specifically, the value of the quantization parameter is increased to quantize the orthogonal transformation coefficients with a greater quantization width, thereby providing more zero coefficients. As a result, the variable length-coding unit 303 takes fewer steps, and for example, a LSI circuit that forms part of the variable length-coding unit 303 consumes less electric power.

The following discusses the second power-saving method operable to control the motion-detecting unit 306.

When an object to be detected is absent in the input image, then the characteristic-detecting unit 20 feeds the search range parameter-changing information "s01-1" into the motion-detecting unit 306. The motion-detecting unit 306 changes a search range upon receipt of the search range parameter-changing information "s01-1".

A search range parameter is specified by a parameter called "fcode" according to the MPEG system. A change in "fcode"-parameter permits the number of pixels in search range to be changed within the range of "±16" to "±1024". The motion-detecting unit 306 searches the pixels falling within the above range, thereby detecting an optimum motion vector.

When the input image is free of the object to be detected, then the characteristic-detecting unit 20 feeds the search range parameter-changing information "s01-1" to the motion-detecting unit 306 to provide a smaller search range. As a result, the motion-detecting unit 306 executes a reduced amount of processing, and a LSI circuit that forms part of the motion-detecting unit 306 consumes less electric power.

Alternatively, the search range parameter-changing information may change a parameter that specifies pixel skipping, instead of changing the fcode-parameter. The alternative provides a reduced number of searching times.

As discussed above, the search conditions to search the motion vector are changed in accordance with the characteristic information, thereby realizing the information terminal unit characterized by thrifty power consumption.

The following discusses the third power-saving method operable to control the image input unit 10.

When an object to be detected is absent in the input image, then the characteristic-detecting unit 20 feeds an input image capture parameter-changing information "s04" into the image input unit 10. The image input unit 10 in receipt of the input image capture parameter-changing information "s04" changes the number of input images to be captured per second.

For example, an input image-capturing parameter refers to the number of frames per second, which is specified by both a profile and a level according to the MPEG system. The input image-capturing parameter is possible to have values of, e.g., "15", "7.5", and "0" (frame per second).

When the object to be detected is absent in the input image, then the characteristic-detecting unit 20 reduces the values of the input image-capturing parameter, thereby providing fewer input image frames per second to be encoded. As a result, both of the characteristic-detecting unit 20 and the image-encoding unit 30 take fewer steps. Consequently, an LSI circuit that forms part of the characteristic-detecting unit 20 as well as part of the image-encoding unit 30 consumes less electric power.

The characteristic-detecting unit 20 advises the input image buffer 309 of the input image capture parameter-changing information "s01-2", thereby changing the number of frames per second to be taken off from the input image buffer 309. As a result, fewer frames are taken off from the input image buffer 309. Consequently, the orthogonal transformation unit 301 and the motion-detecting unit 306, which are both preceded by the input image buffer 309, as well as subsequent circuits undertake a reduced amount of processing. This feature provides thrifty power consumption.

### (Second embodiment)

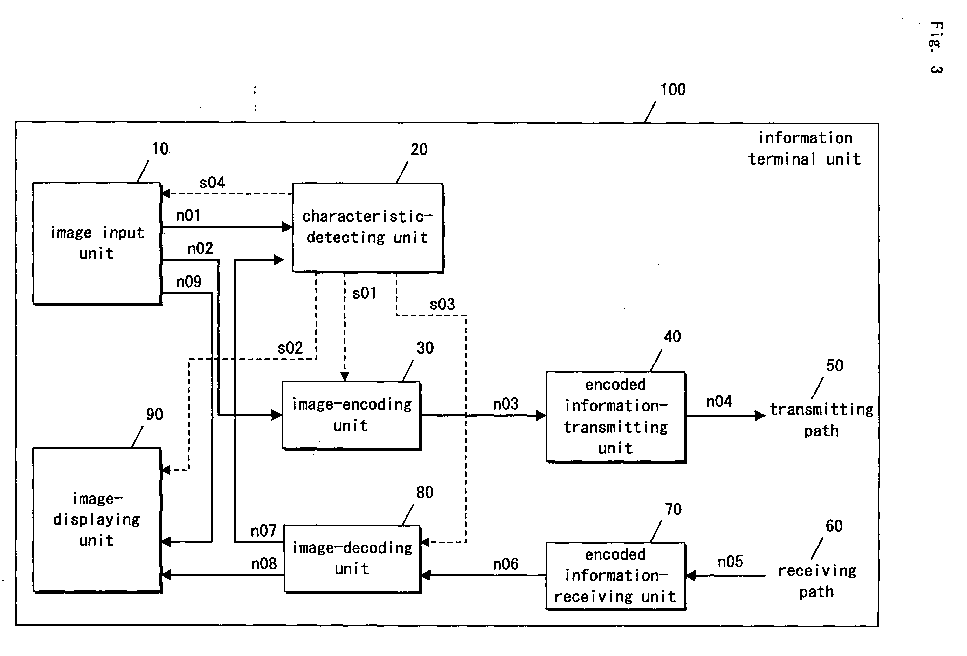

Fig. 3 is a block diagram schematically illustrating an information terminal unit according to a second embodiment. In Fig. 3, components similar to those of Fig. 1 are identified by the same reference characters, and descriptions related thereto are omitted.

The information terminal unit according to the present embodiment as illustrated in Fig. 3 is operable to capture and transmit and receive image information, and includes an encoded information-receiving unit 70, an image-decoding unit 80, and an image-displaying unit 90, other than the components of Fig. 1.

In Fig. 3, a transmitting path 50 and a receiving path 60 are physical transmission pathways operable to communicate encoded image information between first and second information terminal units.

The process in which image information on the first user of the first information terminal unit is captured by the image input unit 10 into, as encoded image information, the transmitting path 50 is similar to that according to the previous embodiment, and descriptions related thereto are omitted.

The encoded information-receiving unit 70 receives encoded image information "n05" from the second information terminal unit. The image-decoding unit 80 decodes the received, encoded image information "n06", thereby producing image information "n08" that is displayable on the image-displaying unit 90.

The image-displaying unit 90 displays thereon first and second information terminal unit-captured image information "n09", "n08". The first information terminal unit-captured image information "n09" has been captured by the image input unit 10 into the image-displaying unit 90. The second information terminal unit-captured image information "n08" has been decoded by the image-decoding unit 80.

The characteristic-detecting unit 20 detects characteristic information from first and second information terminal unit-captured image information "n01", "n07". The first information terminal unit-captured image information "n01" has been captured by the image input unit 10 into the characteristic-detecting unit 20. The second information terminal unit-captured image information "n07" has been decoded by the image-decoding unit 80.

The characteristic-detecting unit 20 according to the present embodiment is operable to control an image-encoding unit 30, the image-displaying unit 90, and the image-decoding unit 80 in accordance with the characteristic information from the first and second information terminal unit-captured images, thereby saving electric power. The way of realizing the thrifty power consumption is now described in detail.

Pursuant to the present embodiment, the characteristic-detecting unit 20 controls the image-encoding unit 30 and the image input unit 10 using parameter-changing information "s01" and "s04", thereby allowing the information terminal unit 100 to consume less electric power. This method is similar to that according to the previous embodiment, and therefore, descriptions related thereto are omitted. The following discusses other methods.

As illustrated in Fig. 3, the characteristic-detecting unit 20 detects the characteristic information from the first or second information terminal unit-captured image, and then feeds parameter-changing information "s02" into the image-displaying unit 90 in accordance with results from the detection. As a result, the image-displaying unit 90 consumes less electric power.

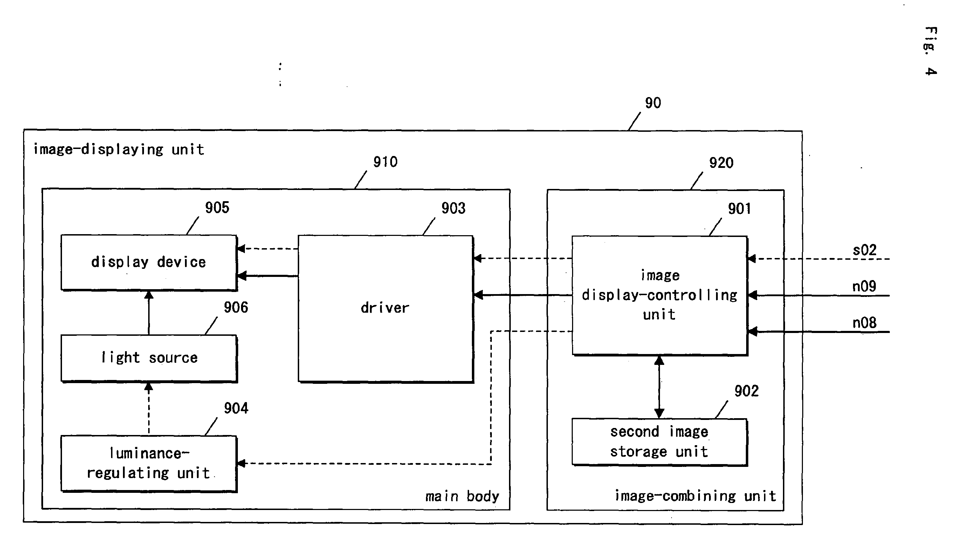

Fig. 4 is a block diagram illustrating the image-displaying unit 90 according to the present embodiment. The image-displaying unit 90 includes a main body 910 and an image-combining unit 920. The main body 910 includes a driver 903, a luminance-regulating unit 904, a display device 905, and a light source 906. The image-combining unit 920 includes an image display-controlling unit 901 and a second image storage unit 902.

The image display-controlling unit 901 combines the second information terminal unit-captured image "n08" from the image-decoding unit 80 with the first information terminal unit-captured image "n09" from the image input unit 10, thereby displaying the combined image on the display device 905. The combined image information is fed from the image display-controlling unit 901 to the display device 905 through the driver 903 before being displayed on the display device 905.

As illustrated by dotted lines in Fig. 4, the image display-controlling unit 901 feeds control signals to the driver 903 and the luminance-regulating unit 904 to control both image display timing and image display luminance in the display device 905.

The second image storage unit 902 is operable to store the combined image from the image display-controlling unit 901, the second information terminal unit-captured image "n08", or the first information terminal unit-captured image "n09".

The characteristic-detecting unit 20 of Fig. 3 detects either characteristic information from the first information terminal unit-captured image that comes from the image input unit 10 or characteristic information from the second information terminal unit-captured image that travels from the image-decoding unit 80. For example, when the first information terminal unit-captured image is free of a facial image of the first user, then the characteristic-detecting unit 20 judges that the first user is prevented from watching the image-displaying unit 90. The characteristic-determining unit 20 then controls the image-displaying unit 90 using the parameter-changing information "s02" to stop transferring the images from the image display-controlling unit 901 to the driver 903, thereby stopping displaying the first or second information terminal unit-captured image.

As described above, the information terminal unit according to the present embodiment is operable to stop displaying the images when the characteristic information required by the first user is undetected from the first or second information terminal unit-captured image. As a result, the image-displaying unit 90 uses less electric power.

An alternative advantage of the information terminal unit according to the present embodiment is that the characteristic-detecting unit 20 may control the image display-controlling unit 901 in accordance with the parameter-changing information "s02", thereby transferring fewer images from the image display-controlling unit 901 to the driver 903. This feature saves power consumption without stopping the image transfer.

As a further alternative, the characteristic-detecting unit 20 according to the present embodiment may allow the image display-controlling unit 901 to control the luminance-regulating unit 904 in accordance with the parameter-changing information "s02", as illustrated in Fig. 4, thereby reducing the luminance of the light source 906. This feature also saves power consumption.

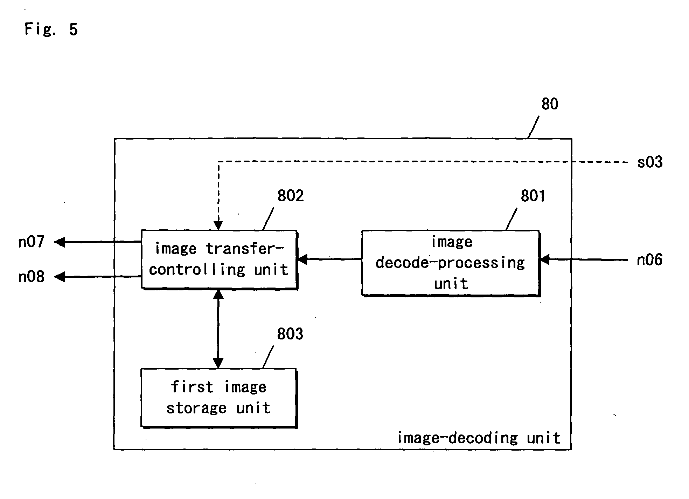

The following discusses, with reference to Fig. 5, how the image-decoding unit 80 consumes less electric power.

Fig. 5 is a block diagram illustrating the image-decoding unit 80 according to the present embodiment. As illustrated in Fig. 5, the image-decoding unit 80 includes an image decode-processing unit 801, an image transfer-controlling unit 802, and a first image storage unit 803.

The image decode-processing unit 801 decodes after receiving the second information terminal unit-captured image information "n06" that has been received by the encoded information-receiving unit 70. The decoded, second information terminal unit-captured image is transferred, as second information terminal unit-captured images "n07" and "n08", to the characteristic-detecting unit 20 and the image-displaying unit 90, respectively, through the image transfer-controlling unit 802. At the same time, the first image storage unit 803 stores the decoded, second information terminal unit-captured image from the image decode-processing unit 801. For example, when the supply from the second information terminal unit is interrupted, then the image information stored in the first image storage unit 803 may be transferred to either the image-display unit 90 or the characteristic-detecting unit 20 through the image transfer-controlling unit 802. As a result, the transferred image information is usable as alternative image information.

The characteristic-detecting unit 20 of Fig. 3 detects the characteristic information from the decoded, second information terminal unit-captured image that comes from the image-decoding unit 80. For example, when a facial image of the second user is absent in the second information terminal unit-captured image, then the characteristic-detecting unit 20 judges that the second user is out of a position to look straight at the second information terminal unit. The characteristic-detecting unit 20 then controls the image transfer-controlling unit 802 of Fig. 5 using parameter-changing information "s03" to either stop transferring the images from the image-decoding unit 80 to the image-displaying unit 90 or transfer fewer images therebetween in the same transfer direction.

As described above, the information terminal unit according to the present embodiment is operable to detect the characteristic information from the decoded, second information terminal unit-captured image information that comes from the image-decoding unit 80. The first user judges, in accordance with the characteristic information, whether or not the second information terminal unit-captured image must be displayed. When the judgment results in a negative response, then the information terminal unit according to the present embodiment is operable to either stop transferring the second information terminal unit-captured images from the image-decoding unit 80 to the image-displaying unit 90 or transfer fewer images therebetween in the same transfer direction. This feature allows the image-decoding unit 80 to feed the images with less electric power or permits the image-displaying unit 90 to receive the images with less electric power.

### (Third embodiment)

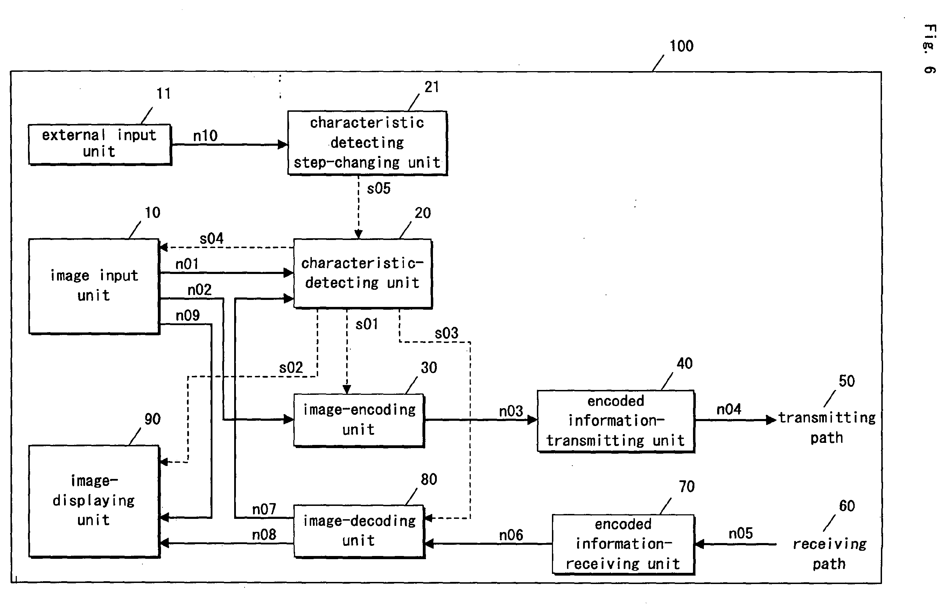

Fig. 6 is a block diagram schematically illustrating an information terminal unit according to a third embodiment. In Fig. 6, components similar to those of Figs. 1 and 3 are identified by the same reference characters, and descriptions related thereto are omitted.

The information terminal unit according to the present embodiment as illustrated in Fig. 6 is operable to send and receive image information, and includes an external input unit 11 and a characteristic detecting step-changing unit 21, other than the components of Fig. 3.

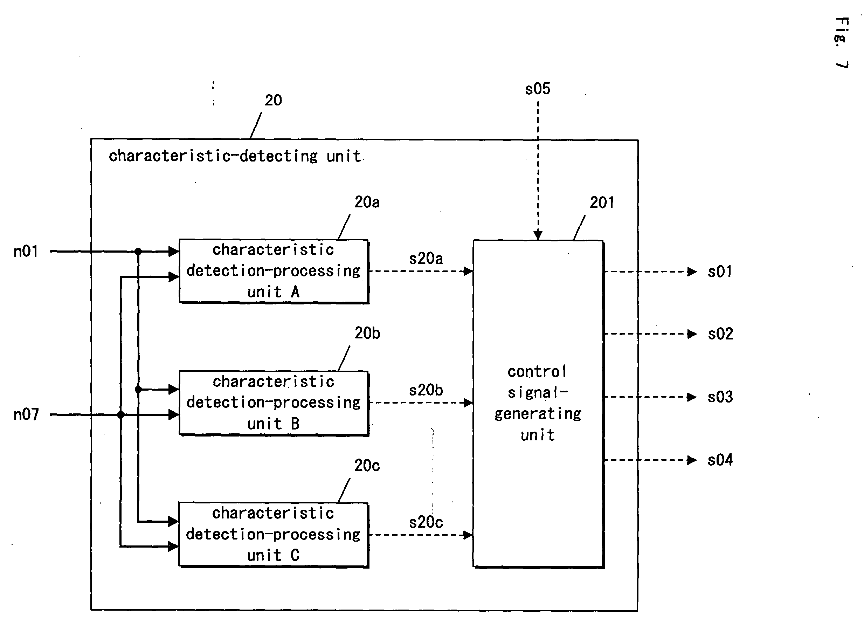

Fig. 7 is a block diagram illustrating a characteristic-detecting unit 20 according to the present embodiment. The characteristic-detecting unit 20 includes a plurality of characteristic detection-processing units 20a, 20b, 20c and a control signal-generating unit 201.

The following discusses, with reference to Fig. 7, how the present embodiment works.

In the characteristic-detecting unit 20 according to the present embodiment as illustrated in Fig. 7, a first information terminal unit-captured image "n01" from an image input unit 10 and a second information terminal unit-captured image "n07" from an image-decoding unit 80 enter the characteristic detection-processing units 20a, 20b, 20c.

The characteristic detection-processing units 20a, 20b, and 20c detect characteristic information "s20a", "s20b", and "s20c", respectively, from the first or second information terminal unit-captured image. The control signal-generating unit 201 generates parameter-changing information "s01", "s02", "s03", and "s04" based on the characteristic information "s20a", "s20b", and "s20c". The parameter-changing information "s01", "s02", "s03", and "s04" are sent to an image-encoding unit 30, an image-displaying unit 90, the image-decoding unit 80, and the image input unit 10, respectively. At this time, the control signal-generating unit 201 may select any one of the characteristic information "s20a", "s20b", and "s20c" in accordance with a characteristic detection-changing signal "s05" (as discussed later) from the characteristic detecting step-changing unit 21, thereby producing any one of or several ones of the parameter-changing information "s01", "s02", "s03", and "s04".

For example, assume that a human face is detected as the detection of characteristics from the first or second information terminal unit-captured image. The characteristic-detecting unit 20 includes the characteristic detection-processing unit "20a" operable to detect a full face of the human face, the characteristic detection-processing unit "20b" operable to detect a profile of the human face, and the characteristic detection-processing unit "20c" operable to detect the sight line of the human face. Therefore, the characteristic-detecting unit 20 is operable to detect, as characteristic information, that the human face is a front view or a side view, or otherwise a view in which the person looks away. The use of the characteristic information permits the information terminal unit 100 to assume a power-saving mode when the characteristic information is found to be other than the front view.

The following discusses external input-driven control according to the present embodiment with reference to Fig. 6.

In Fig. 6, the external input unit 11, formed by either pen input or key input, captures external input information "n10" into the characteristic detecting step-changing unit 21. The characteristic detecting step-changing unit 21 produces the characteristic detection-changing signal "s05" based on the external input information "n10". The characteristic detection-changing signal "s05" serves to control the characteristic control unit 20. As described above, the characteristic detection-changing signal "s05" is operable to selectively activate the characteristic detection-processing units 20a, 20b, and 20c of Fig. 7. The use of the external input-driven control according to the present embodiment makes it feasible to manually regulate power-saving control with finer limits.

For example, a videophone employing the information terminal unit is now described as an illustrative example of the present embodiment. When the first user of the videophone operates keys on the videophone during videophone communication, then the external input unit 11 detects the key pressing, and then transmits the detection to the characteristic detecting step-changing unit 21. Since it has been detected that the first user touches the keys during the videophone communication, the characteristic detecting step-changing unit 21 judges that the first user pays attention to the key operation, not the image-displaying unit 90. As a result, the characteristic-detecting unit 20 changes the characteristic-detecting steps to thrifty power consumption-aimed steps. More specifically, the thrifty power consumption-aimed steps permit the videophone to either assume a darker display screen or show fewer displayed frames per second.

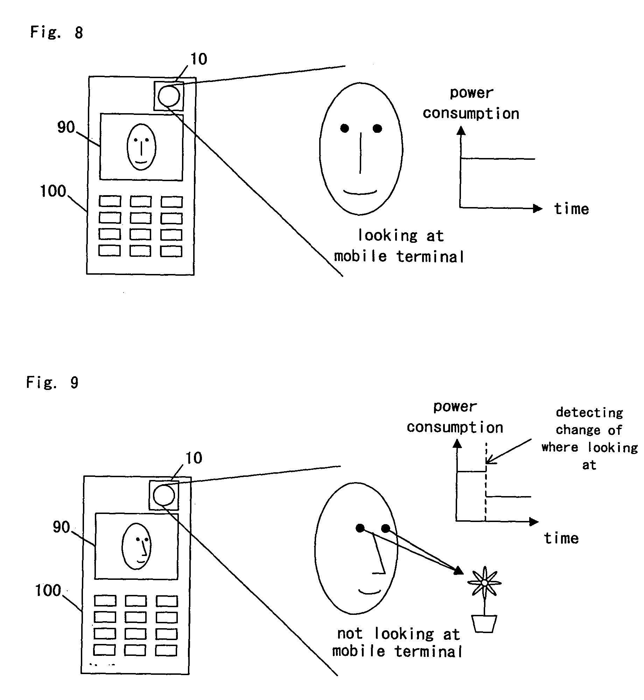

Fig. 8 is an illustration showing a user who is looking at the information terminal unit 100 (or the videophone according to the present embodiment). Fig. 9 is an illustration showing the user who averts his or her eyes from the information terminal unit 100 (or the videophone according to the present embodiment) and looks at a flower beside. As illustrated in Fig. 8, when it is detected that the user looks squarely at the information terminal unit 100, then the parameter-changing information becomes control information that permits components of the information terminal unit 100 to provide usual behaviors. As illustrated in Fig. 9, when it is detected that the user turns his or her eyes away from the information terminal unit 100, then the parameter-changing information becomes control information that forces unnecessary components of the information terminal unit 100 to provide power-saving behaviors.

As described above, the use of the characteristic-detecting unit 20 according to the present embodiment makes it feasible to select the several pieces of characteristic information detected by the characteristic-detecting steps, and to perform different styles of power-saving control. Furthermore, the use of the external input information from the external input unit 11 detects that the first user pays less attention to the image-displaying step or the image-encoding step, and the characteristic-detecting steps are replaced by the control that achieves lesser power consumption. As a result, the information terminal unit 100 can consume less electric power.

Pursuant to the previous two embodiments and the present embodiment, the characteristic-detecting unit 20 is designed to control the image-encoding unit 30, the image-decoding unit 80, the image-displaying unit 90, or the image input unit 10 using the parameter-changing information "s01", "s02", "s03", or "s04". Alternatively, instead of the parameter changing information-driven control, a previously prepared registers for setting may be built into the image-encoding unit 30, the image-decoding unit 80, the image-displaying unit 90, or the image input unit 10 in order to control those units.

The characteristic detection-processing units according to the present embodiment are not limited to three units, but may be varied in quantity.

Although the external input unit 11 according to the present embodiment is the pen input or key input, the external input unit 11 is not limited thereto. Alternatively, the external input unit 11 may be, e.g., voice input. In the alternative, a voice-recognizing unit may be used to recognize particular words, thereby utilizing the recognized words as characteristic information. This feature realizes power-saving behaviors. As a further alternative, the use of a unit operable to detect surrounding brightness makes it feasible to detect characteristic information from the circumstances, thereby providing the power-saving behaviors.

As discussed above, the present invention primarily seeks to provide the information terminal unit operable to save electric power sensitively during operations of the information terminal unit in consideration of the convenience of the user. At this time, the information terminal unit attains the purpose using either the information processed by the information terminal unit or the characteristic information from the environment in which the information terminal unit is present. Accordingly, various modifications and variations of the present invention may be made without departing from the spirit and scope of the present invention.

The information terminal unit according to the present invention is operable to detect the characteristics from the first or second information terminal unit-captured image processed by the information terminal unit, and to control the image-encoding unit, the image-displaying unit, the image-decoding unit, or the image input unit in accordance with the information related to the detected characteristics. This system provides a reduced amount of processing required for image encoding, either stops displaying the images or displays fewer images, either stops transferring the images from the image-decoding unit to the image-displaying unit or transfers fewer images therebetween in the same transfer direction, and provides fewer frames in capturing image. As a result, the information terminal unit characterized by thriftier power consumption is available.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. An information terminal unit operable to capture and transmit the first information terminal unit-captured image to a second information terminal unit, the information terminal unit comprising:
an image input unit (10) operable to capture the first information terminal unit-captured image;
a characteristic-detecting unit (20) operable to detect characteristics from the first information terminal unit-captured image that has been captured by said image input unit (10), thereby generating characteristic information;
an image-encoding unit (30) operable to encode the first information terminal unit-captured image that has been captured by said image input unit (10); and
an encoded information-transmitting unit (40) operable to transmit encoded image information to said second information terminal unit, the encoded image information being produced by said image-encoding unit (30),
wherein said characteristic-detecting unit (20) controls, using the characteristic information, said image-encoding unit (30) in encoding the first information terminal unit-captured image.

2. An information terminal unit as defined in claim 1, wherein said characteristic-detecting unit (20) is operable to change, in accordance with the characteristic information, a number of steps in encoding the first information terminal unit-captured image in said image-encoding unit (10).

3. An information terminal unit as defined in claim 1, wherein said characteristic-detecting unit (20) is operable to change, in accordance with the characteristic information, a condition of a motion vector search performed by said image-encoding unit (30).

4. An information terminal unit as defined in claim 1, wherein said characteristic-detecting unit (20) is operable to change, in accordance with the characteristic information, an amount of codes to be generated for the first information terminal unit-captured image in said image-encoding unit (30).

5. An information terminal unit as defined in claim 1, wherein said characteristic-detecting unit (20) is operable to change, in accordance with the characteristic information, a frame rate in encoding the first information unit-captured image in said image-encoding unit (30).

6. An information terminal unit operable to capture and transmit a first information terminal unit-captured image to a second information terminal unit, the information terminal unit comprising:
an image input unit (10) operable to capture the first information terminal unit-captured image;
an image-displaying unit (90) operable to display thereon the first information terminal unit-captured image that has been captured by said image input unit (10);
a characteristic-detecting unit (20) operable to detect characteristics from the first information terminal unit-captured image that has been captured by said image input unit (10), thereby generating characteristic information;
an image-encoding unit (30) operable to encode the first information terminal unit-captured image that has been captured by said image input unit (10); and
an encoded information-transmitting unit (40) operable to transmit encoded image information to said second information terminal unit, the encoded image information being produced by said image-encoding unit (30),
wherein said characteristic-detecting unit (20) is operable to change an image-displaying pattern in said image-displaying unit (90) in accordance with the characteristic information, the image-displaying pattern including a number of displayed images and luminance of image displaying.

7. An information terminal unit operable to receive an encoded, second information terminal unit-captured image from a second information terminal unit, the information terminal unit comprising:
an encoded information-receiving unit (70) operable to receive the encoded, second information terminal unit-captured image;
an image-decoding unit (80) operable to decode the encoded, second information terminal unit-captured image received by said encoded information-receiving unit (70), thereby producing a second information terminal unit-captured image;
a characteristic-detecting unit (20) operable to detect characteristics from the second information terminal unit-captured image that has been produced by said image-decoding unit (80), thereby generating characteristic information; and
an image-displaying unit (90) operable to display thereon the second information terminal unit-captured image that has been produced by said image-decoding unit (80),
wherein said characteristic-detecting unit (20) is operable to control, using the characteristic information, a number of images to be transmitted from said image-decoding unit (80) to said image-displaying unit (90), each of the images being composed of the second information terminal unit-captured image.

8. An information terminal unit as defined in claim 7, wherein said characteristic-detecting unit (20) is operable to change an image-displaying pattern in said image-displaying unit (90) using the characteristic information, said image-displaying pattern including a number of displayed images and luminance of image displaying.

9. An information terminal unit operable to capture and transmit a first information terminal unit-captured image to a second information terminal unit, and operable to receive and display a second information terminal unit-captured image from said second information terminal unit, the information terminal unit comprising:
an image input unit (10) operable to capture the first information terminal unit-captured image;
an image-encoding unit (30) operable to encode the first information terminal unit-captured image that has been captured by said image input unit (10);
an encoded information-transmitting unit (40) operable to transmit encoded image information to said second information terminal unit, the encoded image information being produced by said image-encoding unit (30);
an encoded information-receiving unit (70) operable to receive an encoded, second information terminal unit-captured image from said second information terminal unit;
an image-decoding unit (80) operable to decode the encoded, second information terminal unit-captured image received by said encoded information-receiving unit (70), thereby producing a second information terminal unit-captured image;
an image-displaying unit (90) operable to display thereon the first and second information terminal unit-captured images, the first information terminal unit-captured image being captured by said image input unit (10), the second information terminal unit-captured image being produced by said image-decoding unit (80); and
a characteristic-detecting unit (20) operable to detect characteristics from the first and second information terminal unit-captured images, thereby generating characteristic information, the first information terminal unit-captured image being captured by said image input unit (10), the second information terminal unit-captured image being produced by said image-decoding unit (80),
wherein said characteristic-detecting unit (20) is operable to control, in accordance with the characteristic information, at least one of said image-encoding unit (30) in image-encoding step, and said image-decoding unit (80) in step of image transferring to said image-displaying unit (90), and said image-displaying unit (90) in image-displaying step.

10. An information terminal unit as defined in claim 9, wherein said characteristic-detecting unit (20) further comprises:
a plurality of characteristic detection-processing units (20a), (20b), and (20c); and
a control signal-generating unit (201) operable to select any one of several pieces of characteristic information, thereby producing a control signal in accordance with selected characteristic information, the several pieces of characteristic information being detected by said plurality of characteristic detection-processing units (20a), (20b), and (20c),
wherein said control signal-generating unit (201) is operable to control, using a produced control signal, said image-encoding unit (30), said image-displaying unit (90), said image-decoding unit (80), and said image input unit (10).

11. An information terminal unit operable to capture and transmit a first information terminal unit-captured image to a second information terminal unit, the information terminal unit comprising:
an image input unit (10) operable to capture the first information terminal unit-captured image;
a characteristic-detecting unit (20) operable to detect characteristics from the first information terminal unit-captured image that has been captured by said image input unit (10), thereby generating characteristic information;
an image-encoding unit (30) operable to encode the first information terminal unit-captured image that has been captured by said image input unit (10);
an external input unit (11) operable to enter external information;
a characteristic detecting step-changing unit (21) operable to control said characteristic-detecting unit (20) using the external information that has been entered by said external input unit (11) into said characteristic detecting step-changing unit (21); and
an encoded information-transmitting unit (40) operable to transmit encoded image information to said second information terminal unit, the encoded image information being produced by said image-encoding unit (30).

12. An information terminal unit operable to capture and transmit a first information terminal unit-captured image to a second information terminal unit, and operable to receive and display a second information terminal unit-captured image from said second information terminal unit, the information terminal unit comprising:
an image input unit (10) operable to capture the first information terminal unit-captured image;
an image-encoding unit (30) operable to encode the first information terminal unit-captured image that has been captured by said image input unit (10);
an encoded information-transmitting unit (40) operable to transmit encoded image information to said second information terminal unit, the encoded image information being produced by said image-encoding unit (30);
an encoded information-receiving unit (70) operable to receive an encoded, second information terminal unit-captured image from said second information terminal unit;
an image-decoding unit (80) operable to decode the encoded, second information terminal unit-captured image received by said encoded information-receiving unit, thereby producing a second information terminal unit-captured image;
an image-displaying unit (90) operable to display thereon the first and second information terminal unit-captured images, the first information terminal unit-captured image being captured by said image input unit (10), the second information terminal unit-captured image being produced by said image-decoding unit (80);
a characteristic-detecting unit (20) operable to detect characteristics from the first and
second information terminal unit-captured images, thereby generating characteristic information, the first information terminal unit-captured image being captured by said image input unit (10), the second information terminal unit-captured image being produced by said image-decoding unit (80);
an external input unit (11) operable to enter external information; and
a characteristic detecting step-changing unit (21) operable to control said characteristic-detecting unit (20) using the external information that has been captured by said external input unit (10) into said characteristic detecting step-changing unit (20),
wherein said characteristic-detecting unit (20) is operable to control, in accordance with either one of manual control and automatic control, at least one of said image-encoding unit (30) in image-encoding step, and said image-decoding unit (80) in step of transferring image information to said image-displaying unit (90), and said image-displaying unit (90) in image-displaying step, the manual control being driven by said external input unit (11), the automatic control being executed in accordance with the characteristic information generated by said characteristic-detecting unit (20).

13. An information terminal unit as defined in claim 1, wherein said characteristic-detecting unit (20) controls starting and stopping characteristic detection from the first information terminal unit-captured image.

14. An information terminal unit as defined in claim 1, wherein said characteristic-detecting unit (20) detects the characteristics by comparing the first information terminal unit-captured image captured by said image input unit (10) with a previously prepared template.

15. An information terminal unit as defined in claim 1, wherein said characteristic-detecting unit (20) detects the characteristics by comparing a motion vector obtained by said image-encoding unit (30) with a previously prepared template.

16. An information terminal unit as defined in claim 1, wherein the characteristic information generated by said characteristic-detecting unit (20) is information on a face of a user of said information terminal unit.

17. A communication method using an information terminal unit operable to capture and transmit a first information terminal unit-captured image to a second information terminal unit, the communication method comprising:
entering the first information terminal unit-captured image;
detecting characteristics from the first information terminal unit-captured image that has been captured by said entering the first information terminal unit-captured image, thereby generating characteristic information;
encoding the first information terminal unit-captured image that has been captured by said entering the first information terminal unit-captured image; and
transmitting encoded image information to said second information terminal unit, the encoded image information being produced by said encoding the first information terminal unit-captured image,
wherein said detecting the characteristics from the first information terminal unit-captured image includes controlling, using the characteristic information, an image-encoding step in said encoding the first information terminal unit-captured image.

18. A communication method as defined in claim 17, wherein said controlling the image-encoding step in said encoding the first information terminal unit-captured image, said controlling the image-encoding step being included in said detecting the characteristics from the first information terminal unit-captured image, includes changing, in accordance with the characteristic information, either one of a number of steps in encoding the first information terminal unit-captured image, a condition of a motion vector search performed by said encoding the first information terminal unit-captured image, an amount of codes generated in said encoding the first information terminal unit-captured image, and a frame rate in said encoding the first information terminal unit-captured image.

19. A communication method using an information terminal unit operable to capture and transmit a first information terminal unit-captured image to a second information terminal unit, the communication method comprising:
entering the first information terminal unit-captured image;
displaying the first information terminal unit-captured image that has been captured by said entering the first information terminal unit-captured image;
detecting characteristics from the first information terminal unit-captured image that has been captured by said entering the first information terminal unit-captured image, thereby generating characteristic information;
encoding the first information terminal unit-captured image that has been captured by said entering the first information terminal unit-captured image; and
transmitting encoded image information to said second information terminal unit, the encoded image information being produced by said encoding the first information terminal unit-captured image,
wherein said detecting the characteristics from the first information terminal unit-captured image includes changing, in accordance with the characteristic information, an image-displaying pattern in said displaying the first information terminal unit-captured image, the image-displaying pattern including a number of displayed images and luminance of image displaying.

20. A communication method using an information terminal unit operable to receive an encoded, second information terminal unit-captured image from a second information terminal unit, the communication method comprising:
receiving the encoded, second information terminal unit-captured image through a receiving path;
decoding the encoded, second information terminal unit-captured image to produce a second information terminal unit-captured image;
detecting characteristics from the second information terminal unit-captured image that has been produced by said decoding the encoded image information to produce the second information terminal unit-captured image, thereby generating characteristic information; and
displaying the second information terminal unit-captured image that has been produced by said decoding the encoded image information to produce the second information terminal unit-captured image,
wherein said detecting the characteristics from the second information terminal unit-captured image includes controlling, using the characteristic information, a number of images to be transmitted from an image-decoding unit to an image-displaying unit, each of the images being composed of the second information terminal unit-captured image.

21. A communication method as defined in claim 20, wherein said detecting the characteristics from the second information terminal unit-captured image includes changing, using the characteristic information, an image-displaying pattern in said displaying the second information terminal unit-captured image, the image-displaying pattern including a number of displayed images and luminance of image displaying.

22. A communication method using an information terminal unit operable to capture and transmit a first information terminal unit-captured image to a second information terminal unit, and operable to receive and display a second information terminal unit-captured image from said second information terminal unit, the communication method comprising:
entering the first information terminal unit-captured image;
encoding the first information terminal unit-captured image that has been captured by said entering the first information terminal unit-captured image;
transmitting encoded image information to said second information terminal unit, the encoded image information being produced by said encoding the first information terminal unit-captured image;
receiving an encoded, second information terminal unit-captured image from said second information terminal unit;
decoding the encoded, second information terminal unit-captured image received by said receiving, thereby producing a second information terminal unit-captured image;
displaying the first and second information terminal unit-captured images, the first information terminal unit-captured image being captured by said entering the first information terminal unit-captured image, the second information terminal unit-captured image being produced by said decoding the encoded, second information terminal unit-captured image; and
detecting characteristics from the first and second information terminal unit-captured images, thereby generating characteristic information, the first information terminal unit-captured image being captured by said entering the first information terminal unit-captured image, the second information terminal unit-captured image being produced by said decoding the encoded, second information terminal unit-captured image,
wherein said detecting the characteristics from the first and second information terminal unit-captured images includes controlling, in accordance with the characteristic information, at least one of an image-encoding step in said encoding the first information terminal unit-captured image, and a step of transferring the second information terminal unit-captured image produced in said decoding the encoded, second information terminal unit-captured image, and an image-displaying step in said displaying the first and second information terminal unit-captured images.

23. A communication method as defined in claim 22, wherein said detecting the characteristics from the first and second information terminal unit-captured images further comprises:
practicing a plurality of characteristic detection-processing steps; and
selecting any one of several pieces of characteristic information to produce a control signal in accordance with selected characteristic information, the several pieces of characteristic information being detected by said practicing the plurality of characteristic detection-processing steps,
wherein said selecting any one of the several pieces of characteristic information to produce the control signal in accordance with the selected characteristic information includes controlling, using the control signal, steps in said entering the first information terminal unit-captured image, steps in said encoding the first information terminal unit-captured image, steps in said decoding the encoded, second information terminal unit-captured image, and steps in said displaying the first and second information terminal unit-captured images.

24. A communication method using an information terminal unit operable to capture and transmit a first information terminal unit-captured image to a second information terminal unit, the communication method comprising:
entering the first information terminal unit-captured image;
detecting characteristics from the first information terminal unit-captured image that has been captured by said entering the first information terminal unit-captured image, thereby generating characteristic information;
encoding the first information terminal unit-captured image that has been captured by said entering the first information terminal unit-captured image;
entering external information;
executing selective control in said detecting the characteristics from the first information terminal unit-captured image, using the external information that has been captured by said entering the external information; and
transmitting encoded image information to said second information terminal unit, the encoded image information being produced by said encoding the first information terminal unit-captured image.

25. A communication method using an information terminal unit operable to capture and transmit a first information terminal unit-captured image to a second information terminal unit, and operable to receive and display a second information terminal unit-captured image from said second information terminal unit, the communication method comprising:
entering the first information terminal unit-captured image;
encoding the first information terminal unit-captured image that has been captured by said entering the first information terminal unit-captured image;
transmitting encoded image information to said second information terminal unit, the encoded image information being produced by said encoding the first information terminal unit-captured image;
receiving an encoded, second information terminal unit-captured image from said second information terminal unit;
decoding the encoded, second information terminal unit-captured image to produce a second information terminal unit-captured image;
displaying the first and second information terminal unit-captured images, the first information terminal unit-captured image being captured by said entering the first information terminal unit-captured image, the second information terminal unit-captured image being produced by said decoding the encoded image information to produce the second information terminal unit-captured image;
detecting characteristics from the first and second information terminal unit-captured images, thereby generating characteristic information, the first information terminal unit-captured image being captured by said entering the first information terminal unit-captured image, the second information terminal unit-captured image being produced by said decoding the encoded image information to produce the second information terminal unit-captured image;
entering external information; and
executing selective control in said detecting the characteristics from the first and second information terminal unit-captured images, using the external information that has been captured by said entering the external information,
wherein said detecting the characteristics from the first and second information terminal unit-captured images includes controlling, in accordance with either one of manual control and automatic control, at least one of an image-encoding step in said encoding the first information terminal unit-captured image, and an image information-transferring step in said decoding the encoded image information to produce the second information terminal unit-captured image, and an image-displaying step in said displaying the first and second information terminal unit-captured images, the manual control being driven by said entering the external information, the automatic control being executed in accordance with the characteristic information generated in said detecting the characteristics from the first and second information terminal unit-captured images.

26. A communication method as defined in claim 17, wherein said detecting the characteristics from the first information terminal unit-captured image includes controlling starting and stopping of characteristic detection from the first information terminal-captured image.

27. A communication method as defined in claim 17, wherein said detecting the characteristics from the first information terminal unit-captured image includes detecting the characteristics by comparing the first information terminal unit-captured image captured by said entering the first information terminal unit-captured image with a previously prepared template.

28. A communication method as defined in claim 17, wherein said detecting the characteristics from the first information terminal unit-captured image includes detecting the characteristics by comparing a motion vector obtained by said encoding the first information terminal unit-captured image with a previously prepared template.

29. A communication method as defined in claim 17, wherein the image information detected by said detecting the characteristics from the first information terminal unit-captured image is information on a face of a user of said information terminal unit.
